# EUROPEAN PATENT SPECIFICATION

(11) **EP 3 267 317 B1**
(45) Date of publication and mention of the grant of the patent: **29.07.2020**
(21) Application number: 17178954.8
(22) Date of filing: 30.06.2017
(51) Int. Cl.: G06F 11/07

(54) **PORTABLE DEVICE WITH VIBRATION SENSOR**
TRAGBARE VORRICHTUNG MIT VIBRATIONSSENSOR
DISPOSITIF PORTABLE AVEC CAPTEUR DE VIBRATION

(30) Priority: 07.07.2016 JP 2016135247
(43) Date of publication of application: 10.01.2018
(73) Proprietor: Kabushiki Kaisha Tokai Rika Denki Seisakusho, Ohguchi-cho Niwa-gun Aichi 480-0195 (JP)
(72) Inventor: ISHIGAKI, Tomohiko, Niwa-gun,, Aichi 480-0195 (JP); KAWAMURA, Tetsuya, Niwa-gun,, Aichi 480-0195 (JP); KAWAMURA, Masayuki, Niwa-gun,, Aichi 480-0195 (JP); KOJIMA, Hiroaki, Niwa-gun,, Aichi 480-0195 (JP)
(74) Representative: TBK

(56) References cited:
- JP-A- 2013 037 632
- US-A1- 2006 043 181

## Description

The present invention relates to a portable device that includes a vibration sensor.

Japanese Laid-Open Patent Publication No. 2013-37632 discloses a portable device that incorporates a vibration sensor. When the vibration sensor detects vibration of the portable device, the vibration sensor provides an interruption signal to a CPU of the portable device. When the interruption signal is received from the vibration sensor, the CPU shifts the state of the portable device to a communication ready state that allows for bidirectional communication between the portable device and a vehicle.

The portable device is used in SMART KEY SYSTEM (registered trademark) in which the portable device performs wireless communication with a communication peer device, which may be a vehicle. When the CPU receives an interruption signal from the vibration sensor, the portable device is shifted to the communication ready state, which allows the portable device to receive LF signals from the communication peer device. When the portable device receives an LF signal from the communication peer device in the communication ready state, the portable device transmits an RF signal in response. Consequently, smart communication is established between the vehicle and the portable device. In SMART KEY SYSTEM, when the portable device is validated by key verification performed through the smart communication, the portable device or the user carrying the portable device is allowed to control the vehicle.

Document US 2006/0043181 A1 discloses a portable device for an electronic key system and a system for reminding to carry the same.

Detection of vibration initiates an interruption process for realizing a specific function of the portable device. However, when the vibration sensor has a defect, which may be mechanical and/or electrical malfunction, and the interruption process cannot be performed, the portable device may not be shifted to the communication ready state, which would allow for the smart communication. In this case, when the remote keyless entry button of the portable device is pressed, the vehicle can be controlled by the portable device through unidirectional communication. However, the usability of the portable device would decrease when such a defective vibration sensor limits the portable device to unidirectional communication as compared to a portable device that includes a normally functioning vibration sensor and is capable of controlling the vehicle through the smart communication.

It is an object of the present invention to provide a portable device that prevents or minimizes decreases in the usability of the portable device that would be caused by a defective vibration sensor.

One aspect of the present invention is a portable electronic key device as defined in claim 1. Further aspects and features of the present invention are set out in the dependent claims.

With this configuration, when the controller determines that the vibration sensor is defective, the controller disconnects the defective vibration sensor so that behaviors of the defective vibration sensor do not affect the controller. In a normal state in which the vibration sensor is not defective, a specific function of the portable device is executed by an interruption from the vibration sensor. With this configuration, the specific function of the portable device is executed even when the vibration sensor is defective. Thus, the failsafe capability of the portable device is increased. This prevents or minimizes decreases in the usability of the portable device that would be caused by a defective vibration sensor.

In some aspect of the present invention, the controller is configured to periodically check the status of the vibration sensor in compliance with a synchronous serial communication protocol of a SPI specification or I²C specification.

With this configuration, the communication speed is increased as compared to asynchronous serial communication (e.g., RS-232C serial communication). Thus, whether or not the vibration sensor 6 is defective is quickly determined.

In some aspect of the present invention, the controller is configured to invalidate an input from the vibration sensor when the controller determines that the vibration sensor is defective.

With this configuration, after the controller determines that the vibration sensor is defective, the controller disregards signals provided from the vibration sensor. This allows the controller to execute the specific function while disconnecting the defective vibration sensor in terms of electric signals or functions.

In some aspect of the present invention, the portable device further includes a wireless signal receiver configured to receive a wireless signal from a communication peer device. The vibration sensor is configured to provide an interruption signal to the controller when the vibration sensor detects vibration of the portable device. The controller is configured to execute a specific function of the portable device when provided with the interruption signal from the vibration sensor. The specific function of the portable device includes a communication standby function that has the wireless signal receiver wait to receive the wireless signal. The controller is configured to activate the specific function of the portable device when the controller detects that the vibration sensor is defective regardless of whether or not the interruption signal is provided from the vibration sensor.

This configuration allows for execution of the function to receive wireless signals even when the vibration sensor is defective. This prevents or minimizes decreases in the usability of the portable device that would be caused by a defective vibration sensor.

In some aspect of the present invention, the portable device further includes a notifying means that is actuated to issue a notification indicating an abnormality of the portable device when the controller determines that the vibration sensor is defective.

With this configuration, the portable device prompts the user of the portable device to replace or repair the portable device using the notifying means.

Accordingly, the aspects of the present invention prevent or minimize decreases in the usability of the portable device that would be caused by a defective vibration sensor.

Other aspects and advantages of the embodiments will become apparent from the following description, taken in conjunction with the accompanying drawings, illustrating by way of example the principles of the invention. Particular aspects of the invention are defined in the independent claims. Various optional embodiments are set out in the dependent claims. In the following, any discussion of any "embodiment" relating to an approach falling outside the claim scope should be understood as referring to an example of the disclosure.

The embodiments, together with objects and advantages thereof, may best be understood by reference to the following description of the presently preferred embodiments together with the accompanying drawings in which:

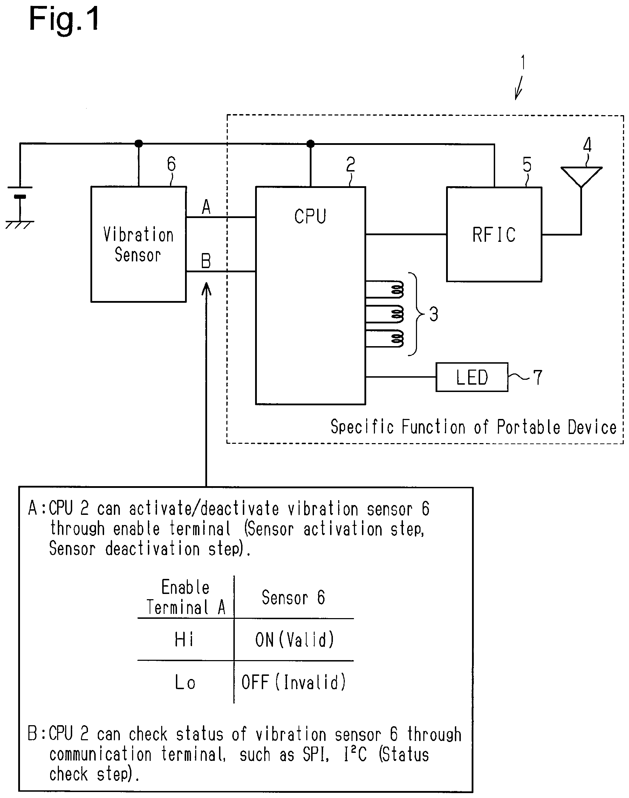

Fig. 1 is a block diagram showing one embodiment of a portable device according to the present invention.

One embodiment of a portable device 1 will now be described.

As shown in Fig. 1, the portable device 1 is a component of SMART KEY SYSTEM (registered trademark). The portable device 1 may be powered by a battery as shown in Fig. 1. The portable device 1 is configured to perform bidirectional communication with a vehicle, which is not shown in the drawing. Additionally, the portable device 1 is configured to function as a communication initiation device of one-way communication. The vehicle is one example of a communication peer device of the portable device 1. The portable device 1 may be a portable electronic key device or key fob.

In SMART KEY SYSTEM, bidirectional communication may be also referred to as smart communication. When the portable device 1 is validated by key verification performed through the smart communication, the portable device 1 or the user carrying the portable device 1 is allowed to control the vehicle. Additionally, when a remote keyless entry button (not shown) arranged on the portable device 1 is pressed, the portable device 1 starts to perform one-way communication with the vehicle. When the portable device 1 is validated by key verification performed through the one-way communication, the vehicle executes control (e.g., locking and unlocking of door, engine start) corresponding to the operation performed on the remote keyless entry button of the portable device 1.

The portable device 1 includes a CPU 2, a coil antenna set 3, and an RFIC 5. The CPU 2 functions as a portable device controller. The coil antenna set 3 is configured to receive LF signals (e.g., radio wave signals in LF band) from the vehicle, which is the communication peer. The RFIC 5 is configured to transmit RF signals (e.g., radio wave signals in UHF) through an antenna 4. The coil antenna set 3 may include an X-axis antenna, a Y-axis antenna, and a Z-axis antenna.

The portable device 1 includes a vibration sensor 6, which is configured to detect vibration of the portable device 1.

The CPU 2 is connected to the vibration sensor 6 so that synchronous serial communication of a SPI specification or I²C specification is performed between the CPU 2 and the vibration sensor 6. The CPU 2 periodically checks the status of the vibration sensor 6 in compliance with the synchronous serial communication protocol. When the status of the vibration sensor 6 is normal, the CPU 2 determines that the vibration sensor 6 is not defective. The CPU 2 switches an enable terminal A of the vibration sensor 6 to a Hi level thereby validating an interruption signal, which may be a vibration detection signal provided from a synchronous serial communication terminal B of the vibration sensor 6. For example, when the vibration sensor 6 detects vibration of the portable device 1, the vibration sensor 6 provides the interruption signal to the CPU 2. At this time, if the CPU 2 determines that the vibration sensor 6 is not defective, the interruption signal to the CPU 2 is validated. The CPU 2 executes an interruption process to activate a communication standby function (i.e., bidirectional communication initiation signal waiting function) and has the coil antenna set 3 wait to receive the LF signal. When the CPU 2 receives the LF signal, the CPU 2 transmits the RF signal to the vehicle through the RFIC 5 and the antenna 4 in response. This establishes the smart communication between the vehicle and the portable device 1.

When the status of the vibration sensor 6 is abnormal, the CPU 2 determines that the vibration sensor 6 is defective. The CPU 2 switches the enable terminal A to a Lo level thereby invalidating inputs from the vibration sensor 6. For example, the interruption signal transmitted from the vibration sensor 6 to the CPU 2 is invalidated. As described above, when the vibration sensor 6 is defective, the CPU 2 disconnects the vibration sensor 6 from the CPU 2 to prevent behaviors (e.g., erroneous vibration detection, incapability of outputting interruption signal) of the vibration sensor 6 from affecting the CPU 2. The CPU 2 disconnects the vibration sensor 6, for example, in terms of electric signals. In this case, the CPU 2 activates the communication standby function (bidirectional communication initiation signal waiting function) to have the coil antenna set 3 wait to receive the LF signal whether or not the interruption signal is provided from the vibration sensor 6. When the CPU 2 receives the LF signal, the CPU 2 transmits the RF signal to the vehicle through the RFIC 5 and the antenna 4 in response. This allows for establishment of the smart communication between the portable device 1 and the vehicle even when the vibration sensor 6 is defective. Thus, the failsafe capability of the portable device 1 is increased.

The LF signal transmitted from the vehicle is one example of a wireless signal that initiates the smart communication. The function that has the coil antenna set 3 wait to receive the LF signal is included in a smart communication function, which is one example of a specific function of the portable device 1. The CPU 2 is one example of a controller. The coil antenna set 3 is one example of a wireless signal receiver or reception antenna.

The portable device 1 may include an LED 7, which is controlled by the CPU 2 to perform a notification operation. When the remote keyless entry button is pressed, the CPU 2, for example, temporarily illuminates the LED 7 in red to issue a visual notification indicating that the portable device 1 is performing one-way communication. When the CPU 2 determines that the vibration sensor 6 is defective, the CPU 2, for example, intermittently illuminates the LED 7 in red to visually notify the user of the portable device 1 that the portable device 1 is abnormal. The LED 7 corresponds to a notifying means.

As described above, the embodiment has the operation and advantages described below.
(1) When the vibration sensor 6 is defective, the CPU 2 disconnects the vibration sensor 6 so that behaviors of the defective vibration sensor 6 do not affect the CPU 2. In the normal state, in which the vibration sensor 6 is not defective, the specific function of the portable device is executed by the interruption of the vibration sensor 6. In the embodiment, the specific function of the portable device is executed even when the vibration sensor 6 is defective. Thus, the failsafe capability of the portable device 1 is increased. This prevents or minimizes decreases in the usability of the portable device 1 that would be caused by the defective vibration sensor 6.
(2) As compared to asynchronous serial communication (e.g., RS-232C serial communication), the communication speed is increased. Thus, whether or not the vibration sensor 6 is defective is quickly determined.
(3) After the defection of the vibration sensor 6 is determined, inputs from the vibration sensor 6 are disregarded. This allows for operation that disconnects the defective vibration sensor 6.
(4) The portable device 1 is capable of performing the smart communication function even when the vibration sensor 6 is defective. This prevents or minimizes decreases in the usability of the portable device 1 that would be caused by the defective vibration sensor 6.
(5) The notification operation of the LED 7 may prompt the user of the portable device 1 to replace or repair the portable device 1.
(6) In the normal state, in which the vibration sensor 6 is not defective, when the vibration sensor 6 detects vibration of the portable device 1, the vibration sensor 6 provides an interruption signal to the CPU 2. When the CPU 2 receives the interruption signal, the CPU 2 activates the communication standby function, which has the coil antenna set 3 wait to receive the LF signal. For example, when the portable device 1 is stored in a stationary state that receives no external vibration, the communication standby function, which is one of multiple functions of the CPU 2, is deactivated. This decreases the standby current by an amount corresponding to the deactivation of the communication standby function. This state may be referred to as a communication suspension state in which bidirectional communication between the portable electronic key device and the communication peer device is disabled and the communication suspension state consumes less power than the communication ready state. Thus, the battery life of the portable device 1 is prolonged. Additionally, the smart communication is limited by a means that differs from the intention of the user. Thus, the security of SMART KEY SYSTEM is improved.

It should be apparent to those skilled in the art that the present invention may be embodied in many other specific forms without departing from the scope of the invention. Particularly, it should be understood that the present invention may be embodied in the following forms.

The status of the vibration sensor 6 may be checked by the CPU 2 through communication performable over a longer transmission distance than the synchronous serial communication of a SPI specification or I²C specification.

The CPU 2 or the vibration sensor 6 may have a threshold value that detects vibration of the portable device 1. The threshold value may be compared with the level of an output signal from the vibration sensor to detect the vibration.

For example, an acceleration sensor may be used as the vibration sensor 6.

The LF signal, which is a low frequency wave, is not limited to a radio wave in the LF band.

The RF signal, which is a high frequency wave, is not limited to a radio wave in the UHF band.

The portable device 1 may issue an audial notification such as a buzzing sound or a tactile notification such as vibration instead of or in addition to the visual notification.

The communication peer device of the portable device 1 is not limited to a vehicle and may be a non-vehicular device such as a building. For example, when an electronic key system includes the portable device 1 and the communication peer device, which may be a building, bidirectional communication is initiated between the portable device 1 and the communication peer device by an LF signal transmitted from the communication peer device. When the portable device 1 is validated by key verification performed through the bidirectional communication, the portable device 1 or the user carrying the portable device 1 is allowed to control the building (or door, illumination device, electric appliance) as the communication peer device.

The present disclosure encompasses the following implementations.
[Implementation 1] A portable electronic key device used with a communication peer device and capable of performing bidirectional communication with the communication peer device, wherein the bidirectional communication is initiated by a bidirectional communication initiation signal transmitted from the communication peer device, the portable electronic key device being characterized by: a vibration sensor that detects vibration of the portable electronic key device; a reception antenna configured to receive the bidirectional communication initiation signal; a transmission antenna that transmits a response signal to the communication peer device in response to the bidirectional communication initiation signal; and
   a controller connected to the vibration sensor, wherein the controller is configured to: determine whether or not the vibration sensor is defective; activate a bidirectional communication initiation signal waiting function when the vibration sensor is functioning normally and the controller receives a vibration detection signal from the vibration sensor; deactivate the bidirectional communication initiation signal waiting function when the vibration sensor is functioning normally and the controller does not receive the vibration detection signal from the vibration sensor; and activate the bidirectional communication initiation signal waiting function when the vibration sensor is defective regardless of whether or not the vibration detection signal is received from the vibration sensor.
[Implementation 2] A portable electronic key device used with a communication peer device and capable of performing bidirectional communication with the communication peer device, wherein the bidirectional communication is initiated by a bidirectional communication initiation signal transmitted from the communication peer device, the portable electronic key device being characterized by: a vibration sensor that detects vibration of the portable electronic key device; a reception antenna configured to receive the bidirectional communication initiation signal; a transmission antenna that transmits a response signal to the communication peer device in response to the bidirectional communication initiation signal; and a controller connected to the vibration sensor, wherein the controller is configured to: determine whether or not the vibration sensor is defective; shift the portable electronic key device to a communication ready state when the vibration sensor is functioning normally and the controller receives a vibration detection signal from the vibration sensor, wherein the communication ready state allows for bidirectional communication between the portable electronic key device and the communication peer device; shift the portable electronic key device to a communication suspension state when the vibration sensor is functioning normally and the controller does not receives the vibration detection signal from the vibration sensor, wherein the communication suspension state disables bidirectional communication between the portable electronic key device and the communication peer device, and the communication suspension state consumes less power than the communication ready state; and shift the portable electronic key device to the communication ready state when the vibration sensor is defective regardless of whether or not the vibration detection signal is received from the vibration sensor.
[Implementation 3] A method of operating a portable electronic key device used with a communication peer device and capable of performing bidirectional communication with the communication peer device, wherein the bidirectional communication is initiated by a bidirectional communication initiation signal transmitted from the communication peer device, the portable electronic key device including: a vibration sensor that detects vibration of the portable electronic key device, a reception antenna configured to receive the bidirectional communication initiation signal, a transmission antenna that transmits a response signal to the communication peer device in response to the bidirectional communication initiation signal, and a controller connected to the vibration sensor, the method comprising: determining, by the the controller, whether or not the vibration sensor is defective; activating, by the the controller, a bidirectional communication initiation signal waiting function when the vibration sensor is functioning normally and the controller receives a vibration detection signal from the vibration sensor; deactivating, by the the controller, the bidirectional communication initiation signal waiting function when the vibration sensor is functioning normally and the controller does not receive the vibration detection signal from the vibration sensor; and activating, by the the controller, the bidirectional communication initiation signal waiting function when the vibration sensor is defective regardless of whether or not the vibration detection signal is received from the vibration sensor.
[Implementation 4] A method of operating a portable electronic key device used with a communication peer device and capable of performing bidirectional communication with the communication peer device, wherein the bidirectional communication is initiated by a bidirectional communication initiation signal transmitted from the communication peer device, the portable electronic key device including: a vibration sensor that detects vibration of the portable electronic key device, a reception antenna configured to receive the bidirectional communication initiation signal, a transmission antenna that transmits a response signal to the communication peer device in response to the bidirectional communication initiation signal, and a controller connected to the vibration sensor, the method comprising: determining, by the controller, whether or not the vibration sensor is defective; shifting, by the controller, the portable electronic key device to a communication ready state when the vibration sensor is functioning normally and the controller receives a vibration detection signal from the vibration sensor, wherein the communication ready state allows for bidirectional communication between the portable electronic key device and the communication peer device; shifting, by the controller, the portable electronic key device to a communication suspension state when the vibration sensor is functioning normally and the controller does not receives the vibration detection signal from the vibration sensor, wherein the communication suspension state disables bidirectional communication between the portable electronic key device and the communication peer device, and the communication suspension state consumes less power than the communication ready state; and shifting, by the controller, the portable electronic key device to the communication ready state when the vibration sensor is defective regardless of whether or not the vibration detection signal is received from the vibration sensor.

The present examples and embodiments are to be considered as illustrative and not restrictive, and the invention is not to be limited to the details given herein, but may be modified within the scope of the appended claims. For example, one or more of the components may be omitted from the components described in the embodiments (or one or more aspects thereof). Components in different embodiments may be appropriately combined.

## Claims

1. A portable electronic key device (1) used with a communication peer device and capable of performing bidirectional communication with the communication peer device, wherein the bidirectional communication is initiated by a bidirectional communication initiation signal transmitted from the communication peer device, the portable electronic key device (1) being **characterized by**:
a vibration sensor (6) configured to detect vibration of the portable electronic key device (1);
a reception antenna (3) configured to receive the bidirectional communication initiation signal;
a transmission antenna (4) configured to transmit a response signal to the communication peer device in response to the bidirectional communication initiation signal; and
a controller (2) connected to the vibration sensor (6), wherein the controller (2) is configured to:
check a status of the vibration sensor (6) to determine whether or not the vibration sensor (6) is defective;
activate a bidirectional communication initiation signal waiting function when the vibration sensor (6) is functioning normally and the controller (2) receives a vibration detection signal from the vibration sensor (6);
deactivate the bidirectional communication initiation signal waiting function when the vibration sensor (6) is functioning normally and the controller (2) does not receive the vibration detection signal from the vibration sensor (6); and
activate the bidirectional communication initiation signal waiting function when the vibration sensor (6) is defective regardless of whether or not the vibration detection signal is received from the vibration sensor (6).

2. The portable electronic key device (1) according to claim 1, **characterized in that** the controller (2) is configured to periodically check the status of the vibration sensor (6) in compliance with a synchronous serial communication protocol of a SPI specification or I²C specification.

3. The portable electronic key device (1) according to claim 1 or 2, **characterized in that** the controller (2) is configured to invalidate an input from the vibration sensor (6) when the controller (2) determines that the vibration sensor (6) is defective.

4. The portable electronic key device (1) according to any one of claims 1 to 3, wherein
the vibration sensor (6) is configured to provide an interruption signal to the controller (2) when the vibration sensor (6) detects vibration of the portable electronic key device (1),
the controller (2) is configured to execute a specific function of the portable electronic key device (1) when provided with the interruption signal from the vibration sensor (6),
the specific function of the portable electronic key device (1) includes a communication standby function that has the wireless signal receiver (3) wait to receive the wireless signal, and
the controller (2) is configured to activate the specific function of the portable electronic key device (1) when the controller (2) detects that the vibration sensor (6) is defective regardless of whether or not the interruption signal is provided from the vibration sensor (6).

5. The portable electronic key device (1) according to claim 1 to 4, **characterized by** a notifying means (7) that is actuated to issue a notification indicating an abnormality of the portable electronic key device (1) when the controller (2) determines that the vibration sensor (6) is defective.

## Patentansprüche

1. Tragbare Elektronikschlüsseleinrichtung (1), die mit einer Kommunikationspartnereinrichtung verwendet wird und dazu in der Lage ist, eine bidirektionale Kommunikation mit der Kommunikationspartnereinrichtung durchzuführen, wobei die bidirektionale Kommunikation durch ein Bidirektionalkommunikationsinitiierungssignal initiiert wird, dass von der Kommunikationspartnereinrichtung übertragen wird, **dadurch gekennzeichnet, dass** die tragbare Elektronikschlüsseleinrichtung (1) aufweist:
einen Vibrationssensor (6), der dazu konfiguriert ist, eine Vibration der tragbaren Elektronikschlüsseleinrichtung (1) zu erfassen;
eine Empfangsantenne (3), die dazu konfiguriert ist, das Bidirektionalkommunikationsinitiierungssignal zu empfangen;
eine Übertragungsantenne (4), die dazu konfiguriert ist, ein Antwortsignal an die Kommunikationspartnereinrichtung als Reaktion auf das Bidirektionalkommunikationsinitiierungssignal zu übertragen; und
eine Steuerung (2), die mit dem Vibrationssensor (6) verbunden ist, wobei die Steuerung (2) dazu konfiguriert ist:
einen Status des Vibrationssensors (6) zu überprüfen, um zu bestimmen, ob der Vibrationssensor (6) defekt ist oder nicht;
eine Bidirektionalkommunikationsinitiierungssignalwartefunktion zu aktivieren, wenn der Vibrationssensor (6) normal funktioniert und die Steuerung (2) ein Vibrationserfassungssignal von dem Vibrationssensor (6) empfängt;
die Bidirektionalkommunikationsinitiierungssignalwartefunktion zu deaktivieren, wenn der Vibrationssensor (6) normal funktioniert und die Steuerung (2) das Vibrationserfassungssignal von dem Vibrationssensor (6) nicht empfängt; und
die Bidirektionalkommunikationsinitiierungssignalwartefunktion zu aktivieren, wenn der Vibrationssensor (6) defekt ist, unabhängig davon, ob das Vibrationserfassungssignal von dem Vibrationssensor (6) empfangen wird oder nicht.

2. Tragbare Elektronikschlüsseleinrichtung (1) gemäß Anspruch 1, **dadurch gekennzeichnet, dass** die Steuerung (2) dazu konfiguriert ist, den Status des Vibrationssensors (6) in Übereinstimmung mit einem synchronen seriellen Kommunikationsprotokoll einer SPI-Spezifikation oder einer I²C-Spezifikation periodisch zu überprüfen.

3. Tragbare Elektronikschlüsseleinrichtung (1) gemäß Anspruch 1 oder 2, **dadurch gekennzeichnet, dass** die Steuerung (2) dazu konfiguriert ist, eine Eingabe von dem Vibrationssensor (6) ungültig zu machen, wenn die Steuerung (2) bestimmt, dass der Vibrationssensor (6) defekt ist.

4. Tragbare Elektronikschlüsseleinrichtung (1) gemäß einem der Ansprüche 1 bis 3, wobei
der Vibrationssensor (6) dazu konfiguriert ist, ein Unterbrechungssignal an die Steuerung (2) bereitzustellen, wenn der Vibrationssensor (6) eine Vibration der tragbaren Elektronikschlüsseleinrichtung (1) erfasst,
die Steuerung (2) dazu konfiguriert, eine spezifische Funktion der tragbaren Elektronikschlüsseleinrichtung (1) auszuführen, wenn das Unterbrechungssignal von dem Vibrationssensor (6) an diese bereitgestellt wird,
die spezifische Funktion der tragbaren Elektronikschlüsseleinrichtung (1) eine Kommunikationsbereitschaftsfunktion erfasst, die den drahtlosen Signalempfänger (3) veranlasst, auf das drahtlose Signal zu warten, und
die Steuerung (2) dazu konfiguriert ist, die spezifische Funktion der tragbaren Elektronikschlüsseleinrichtung (1) zu aktivieren, wenn die Steuerung (2) erfasst, dass der Vibrationssensor (6) defekt ist, unabhängig davon, ob das Unterbrechungssignal von dem Vibrationssensor (6) bereitgestellt ist oder nicht.

5. Tragbare Elektronikschlüsseleinrichtung (1) gemäß Anspruch 1 bis 4, **gekennzeichnet durch** eine Mitteilungseinrichtung (7), die betätigt wird, um eine Mitteilung auszugeben, die eine Abnormalität der tragbaren Elektronikschlüsseleinrichtung (1) angibt, wenn die Steuerung (2) bestimmt, dass der Vibrationssensor (6) defekt ist.

## Revendications

1. Dispositif de clé électronique portable (1) utilisé avec un dispositif homologue de communication et apte à réaliser une communication bidirectionnelle avec le dispositif homologue de communication, dans lequel la communication bidirectionnelle est initiée par un signal d'initiation de communication bidirectionnelle émis à partir du dispositif homologue de communication, le dispositif de clé électronique portable (1) étant **caractérisé par** :
un capteur de vibration (6) configuré pour détecter une vibration du dispositif de clé électronique portable (1) ;
une antenne de réception (3) configurée pour recevoir le signal d'initiation de communication bidirectionnelle ;
une antenne d'émission (4) configurée pour émettre un signal de réponse vers le dispositif homologue de communication en réponse au signal d'initiation de communication bidirectionnelle ; et
un contrôleur (2) connecté au capteur de vibration (6), dans lequel le contrôleur (2) est configuré pour :
vérifier un état du capteur de vibration (6) pour déterminer que le capteur de vibration (6) est défectueux ou non ;
activer une fonction d'attente de signal d'initiation de communication bidirectionnelle lorsque le capteur de vibration (6) fonctionne normalement et le contrôleur (2) reçoit un signal de détection de vibration à partir du capteur de vibration (6) ;
désactiver la fonction d'attente de signal d'initiation de communication bidirectionnelle lorsque le capteur de vibration (6) fonctionne normalement et le contrôleur (2) ne reçoit pas le signal de détection de vibration à partir du capteur de vibration (6) ; et
activer la fonction d'attente de signal d'initiation de communication bidirectionnelle lorsque le capteur de vibration (6) est défectueux, indépendamment du fait que le signal de détection de vibration est reçu ou non à partir du capteur de vibration (6).

2. Dispositif de clé électronique portable (1) selon la revendication 1, **caractérisé en ce que** le contrôleur (2) est configuré pour vérifier périodiquement l'état du capteur de vibration (6) conformément à un protocole de communication série synchrone d'une spécification d'interface périphérique série, SPI, ou d'une spécification de circuits inter-intégrés, I²C.

3. Dispositif de clé électronique portable (1) selon la revendication 1 ou 2, **caractérisé en ce que** le contrôleur (2) est configuré pour invalider une entrée issue du capteur de vibration (6) lorsque le contrôleur (2) détermine que le capteur de vibration (6) est défectueux.

4. Dispositif de clé électronique portable (1) selon l'une quelconque des revendications 1 à 3, dans lequel
le capteur de vibration (6) est configuré pour fournir un signal d'interruption au contrôleur (2) lorsque le capteur de vibration (6) détecte une vibration du dispositif de clé électronique portable (1),
le contrôleur (2) est configuré pour exécuter une fonction spécifique du dispositif de clé électronique portable (1) lorsque le signal d'interruption issu du capteur de vibration (6) lui est fourni,
la fonction spécifique du dispositif de clé électronique portable (1) inclut une fonction de veille de communication qui fait que le récepteur de signal sans fil (3) attend de recevoir le signal sans fil, et
le contrôleur (2) est configuré pour activer la fonction spécifique du dispositif de clé électronique portable (1) lorsque le contrôleur (2) détecte que le capteur de vibration (6) est défectueux indépendamment du fait que le signal d'interruption est fourni ou non à partir du capteur de vibration (6).

5. Dispositif de clé électronique portable (1) selon la revendication 1 à 4, **caractérisé par** un moyen de notification (7) qui est actionné pour délivrer une notification indiquant une anomalie du dispositif de clé électronique portable (1) lorsque le contrôleur (2) détermine que le capteur de vibration (6) est défectueux.
